# EUROPÄISCHE PATENTSCHRIFT

(11) **EP 0 473 870 B1**
(45) Veröffentlichungstag und Bekanntmachung des Hinweises auf die Patenterteilung: **12.01.1994**
(21) Anmeldenummer: 91104977.3
(22) Anmeldetag: 28.03.1991
(51) Int. Cl.: B01J 8/02, C01B 3/38

(54) **Reformer, insbesondere autothermer Sekundärreformer**
Reformer, especially for autothermal secondary reforming
Appareil de reformage, en particulier de reformage autothermique secondaire

(30) Priorität: 30.08.1990 DE 4027410
(43) Veröffentlichungstag der Anmeldung: 11.03.1992
(73) Patentinhaber: Uhde GmbH, 44141 Dortmund (DE)
(72) Erfinder: Severin, Manfred, W-5841 Geisecke (DE); Marsch, Hans-Dieter, W-4600 Dortmund 76 (DE)
(74) Vertreter: Patentanwälte Meinke, Dabringhaus und Partner

(56) Entgegenhaltungen:
- DE-A- 1 542 539
- DE-A- 2 504 343
- DE-A- 3 532 413
- DE-C- 3 735 193
- US-A- 3 340 320

## Beschreibung

Die Erfindung richtet sich auf einen Reformer, insbesondere auf einen autothermen Sekundärreformer, mit einer zentrisch von unten durch den Katalysator hindurch in eine Misch- bzw. Reaktionskammer geführten Gaszuführung und mit einer Oxidationsmittelzuführung.

Ein derartiger Reformer ist z.B. aus der DE-C-37 35 193 bekannt, bei dem die Oxidationsmittelzuführung, ebenso wie die Gaszuführung, von unten durch den Katalysator durch ein gemeinsames zentrisch angeordnetes Rohr in den Kopfbereich der Reaktionskammer geführt wird. Bei dieser einfachen Zusammenführung der Gasströme von Oxidationsmittel und Prozeßgas kann es vorkommen, daß keine hinreichende Verteilung und Vermischung der beiden Komponenten, die für einen optimalen Reaktionsverlauf im Katalysator sorgen, bewirkt wird. Einen axial durchströmten Reaktor zeigt auch die DE-A-15 42 539.

Aufgabe der Erfindung ist daher die Schaffung einer Vorrichtung, mit der die Verteilung des Oxidationsmittels und die Mischung mit dem Prozeßgas unter Beibehaltung der zentrischen Gaszuführung von unten optimiert wird.

Mit einem Reformer der eingangs bezeichneten Art wird diese Aufgabe gemäß der Erfindung dadurch gelöst, daß in wenigstens einer Ebene oberhalb des Katalysatorbettes wenigstens zwei die Innenisolierung von außen nach innen durchsetzende, das Oxidationsmittel zuführende, Zuführdüsen vorgesehen sind, wobei das Auslaßende der zentrischen Gaszuführung in der Ebene der Oxidationsmittelzuführung oder in einer noch höher gelegenen Ebene oberhalb der Ebene der Oxidationsmittelzuführungen angeordnet ist.

Mit der Erfindung wird insbesondere erreicht, daß eine optimale Vermischung der Reaktionspartner im Brennraum durch die Zuführungsdüsen, als Misch- und Verteilelemente, stattfindet.

Aus der DE-A-28 41 127 ist ein Sekundärreformer bekannt, bei dem die Vermischung und Verteilung von Oxidationsmittel und Prozeßgas durch strahlerzeugende Elemente angesprochen ist. Nachteilig ist dort, daß die Gaszuführung des Prozeßgases nicht von unten zentrisch durch das Katalysatorbett in die Misch- und Reaktionskammer hindurchgeführt wird, und so die Vorteile dieser Anordnungsweise entfallen. Dies gilt auch für eine Lösung nach der DE-A-35 32 413.

Zweckmäßig kann es sein, wenn die zentrische Gaszuführung an ihrem Auslaßende mit einem Gasverteiler ausgerüstet ist. Dieser Gasverteiler kann die Verwirbelung der Prozeßgase noch erhöhen. Vorteilhaft ist es auch, wenn die Ebene, in der das Auslaßende der Gaszuführung liegt und die Ebene, in der die Zuführungsdüsen angeordnet sind, zueinander parallel und senkrecht zur vertikalen Mittelachse der Misch- und Reaktionskammer verlaufen, so daß die Gasströme des Prozeßgases und des Oxidationsmittels etwa senkrecht aufeinandertreffen und damit entsprechend gut verwirbeln.

In vorteilhafter Weise kann der Gasverteiler als ein drallgebendes Element ausgebildet werden, um die Verwirbelung in der Misch- bzw. Reaktionskammer noch weiter zu verbessern.

Dazu ist es zweckmäßig, wenn der Gasverteiler aus einem Gehäuse besteht, dessen vertikale Mittelachse mit der vertikalen Mittelachse der Misch- bzw. Reaktionskammer zusammenfällt und der an seiner Außenseite spaltförmige Öffnungen aufweist, die von vertikalen Leitwänden begrenzt sind.

In vorteilhafter Weise werden die Leitwände und die Zuführungsdüsen symmetrisch zur vertikalen Mittelachse der Misch- und Reaktionskammer angeordnet und in einem Winkel kleiner 90° zum zugehörigen Radius angestellt.

Eine Vermischung der Gasströme kann noch weiter optimiert werden, wenn die Zuführungsdüsen mit der Außenwand einen Winkel β bilden, der zwischen 25° und 45° groß ist, was nach der Erfindung ebenfalls vorgesehen sein kann.

In Ausgestaltung der Erfindung ist vorgesehen, daß die Zuführungsdüsen eine Innenisolierung der Misch- bzw. Reaktionskammer durchsetzen und mit der Innenseite der Innenisolierung fluchten, so daß eine Überhitzung der Zuführungsdüsen vermieden wird.

Um für eine optimale Versorgung der Zuführungsdüsen mit z.B. Luft oder Sauerstoff zu sorgen, schlägt die Erfindung vor, die Zuführungsdüsen mit mindestens einer ringförmigen Speiseleitung zu versehen.

Natürlich können die Zuführungsdüsen auch mit einer Kühlvorrichtung versehen werden, wobei die Kühlvorrichtung aus einem geschlossenen oder offenen Doppelmantel mit fließendem Kühlmedium besteht, z.B. Wasser oder Dampf.

Zweckmäßig kann es auch sein, die Zuführungsdüsen mit einer Vorrichtung zur Beeinflussung der Flammenform zu versehen.

Die Erfindung ist nachstehend anhand der Zeichnung beispielsweise näher erläutert. Diese zeigt in:

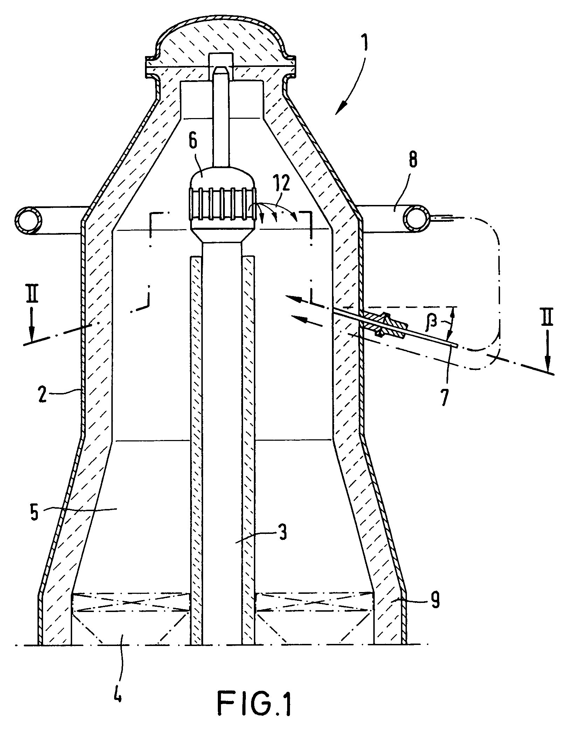

- Fig. 1: einen Schnitt durch den oberen Teil eines Sekundärreformers nach der Erfindung und in
- Fig. 2: einen Schnitt gemäß Linie II-II in Fig. 1.

Der in den Figuren dargestellte Sekundärreformer ist allgemein mit 1 bezeichnet. Dieser weist u.a. eine Reaktionskammerwand 2 und eine zentrische Gaszuführung 3, die durch einen mit 4 bezeichneten Katalysator in eine Misch- und Reaktionskammer 5 hindurchgeführt ist, auf.

Oberhalb des Auslaßendes der Gaszuführung 3 ist ein Gasverteiler 6 und die Zuführungsdüsen 7 der Oxidationsmittelzuführung, die über eine ringförmige Speiseleitung 8 versorgt werden, angeordnet.

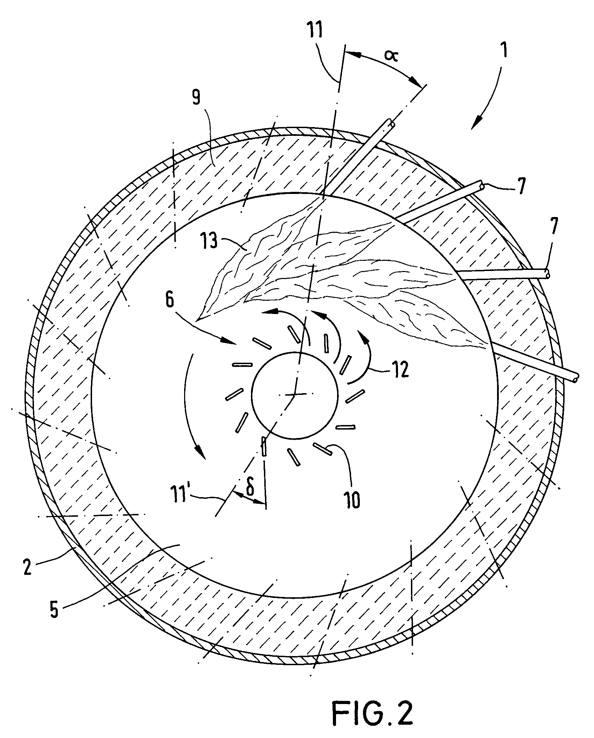

Fig. 2 zeigt die bündig mit der Innenisolierung 9 der Reaktionskammerwand 2 abschließenden Zuführungsdüsen 7, die in einem Winkel α zum jeweiligen Radius 11 angestellt sind. Der Gasverteiler 6 weist Leitwände 10 auf, die einen Winkel δ mit dem Radius 11' bilden. Die Pfeile 12 veranschaulichen den Prozeßgasstrom. Mit der Ziffer 13 ist die bei der Vermischung von Prozeßgas und Oxidationsmittel entstehende Flammenform gekennzeichnet.

Die Wirkungsweise ist dabei die folgende:

Durch die zentrale Gaszuführung treten aus dem Gasverteiler 6 Gasströme aus. Die besondere Stellung der Leitwände 10 bewirkt eine drallartige Strömung. Diese Gasströme treffen auf die durch die Zuführungsdüsen in die Misch- und Reaktionskammer 5 einströmenden Oxidationsmittel, was zur gewünschten Oxidation der Reaktionsgase führt. Das Reaktionsprodukt strömt anschließend durch den Katalysator 4.

Natürlich ist das beschriebene Ausführungsbeispiel der Erfindung noch in vielfacher Hinsicht abzuändern, ohne den Grundgedanken zu verlassen. So ist die Erfindung insbesondere nicht auf einen Gasverteiler in der oben beschriebenen Ausführungsform beschränkt. Gegebenenfalls ist der Gasverteiler selbst drehbar. Die Leitwände können gekrümmt oder gewölbt ausgebildet sein. Auch können statt der sich zwischen den Leitwänden bildenden Anström-Kanäle in Kreisform am Kopf der Gaszuführung 3 Düsen vorgesehen sein.

## Patentansprüche

1. Reformer (1), insbesondere autothermer Sekundärreformer, mit einer zentrisch von unten durch den Katalysator (4) hindurch in eine Misch- bzw. Reaktionskammer (5) geführten Gaszuführung (3) und mit einer Oxidationsmittelzuführung (7),
dadurch gekennzeichnet,
daß in wenigstens einer Ebene oberhalb des Katalysatorbettes (4) wenigstens zwei die Innenisolierung (9) von außen nach innen durchsetzende, das Oxidationsmittel zuführende Zuführdüsen (7) vorgesehen sind, wobei das Auslaßende der zentrischen Gaszuführung (3) in der Ebene der Oxidationsmittelzuführung oder in einer noch höher gelegenen Ebene oberhalb der Ebene der Oxidationsmittelzuführungen angeordnet ist.

2. Reformer nach Anspruch 1,
dadurch gekennzeichnet,
daß die Zuführdüsen (7) mit der Innenseite der Isolierung(9) fluchten.

3. Reformer nach Anspruch 1 oder 2,
dadurch gekennzeichnet,
daß eine ringförmige Speiseleitung zur Beaufschlagung der Zuführungsdüsen (7) vorgesehen ist.

4. Reformer nach einem der vorangehenden Ansprüche,
dadurch gekennzeichnet,
daß die zentrische Gaszuführung (3) an ihrem Auslaßende mit einem Gasverteiler (6) ausgerüstet ist.

5. Reformer nach einem der vorangehenden Ansprüche,
dadurch gekennzeichnet,
daß die Ebene, in der das Auslaßende der Gaszuführung (3) liegt, und die Ebene, in der die Zuführungsdüsen (7) angeordnet sind, zueinander parallel und senkrecht zur vertikalen Mittelachse der Misch- und Reaktionskammer (5) verlaufen.

6. Reformer nach einem der vorangehenden Ansprüche,
dadurch gekennzeichnet,
daß der Gasverteiler (6) als ein drallgebendes Element ausgebildet ist.

7. Reformer nach einem der vorangehenden Ansprüche,
dadurch gekennzeichnet,
daß der Gasverteiler (6) aus einem Gehäuse besteht, dessen vertikale Mittelachse mit der vertikalen Mittelachse der Misch- bzw. Reaktionskammer (5) zusammenfällt, und an seiner Außenseite spaltförmige Öffnungen aufweist, die von vertikalen Leitwänden (10) begrenzt sind.

8. Reformer nach einem der vorangehenden Ansprüche,
dadurch gekennzeichnet,
daß die Leitwände (10) symmetrisch zur vertikalen Mittelachse der Misch- und Reaktionskammer angeordnet und in einem Winkel δ kleiner 90° zum zugehörigen Radius (11) angestellt sind.

9. Reformer nach einem der vorangehenden Ansprüche,
dadurch gekennzeichnet,
daß die Zuführungsdüsen (7) in einem Winkel α zwischen 25° und 45° zum zugehörigen Radius (11') angestellt sind.

10. Reformer nach einem der vorangehenden Ansprüche,
dadurch gekennzeichnet,
daß die Zuführungsdüsen (7) mit einer Kühlvorrichtung und mit einer Vorrichtung zur Beeinflussung der Flammenform (13) versehen sind.

11. Reformer nach Anspruch 10,
dadurch gekennzeichnet,
daß die Kühlvorrichtung aus einem in einem geschlossenen oder offenen Doppelmantel fließenden Kühlmedium besteht.

12. Reformer nach einem der vorangehenden Ansprüche,
dadurch gekennzeichnet,
daß die Zuführungsdüsen (7) mit einer Vorrichtung zur Beeinflussung der Flammenform (12) versehen sind.

## Claims

1. A reformer (1), in particular an autothermal secondary reformer, comprising a gas feed (3) which is passed centrally from below through the catalyst (4) into a mixing or reaction chamber (5), and an oxidation agent feed (7), characterised in that provided in at least one plane above the catalyst bed (4) are at least two feed nozzles (7) for feeding the oxidation agent, which pass through the internal insulation (9) from the outside inwardly, wherein the outlet end of the central gas feed (3) is disposed in the plane of the oxidation agent feed or in a still higher plane above the plane of the oxidation agent feeds.

2. A reformer according to claim 1 characterised in that the feed nozzles (7) are aligned with the inside of the insulation (9).

3. A reformer according to claim 1 or claim 2 characterised in that there is provided a supply conduit in ring form for supplying the feed nozzles (7).

4. A reformer according to one of the preceding claims characterised in that the central gas feed (3) is provided at its outlet end with a gas distributor (6).

5. A reformer according to one of the preceding claims characterised in that the plane in which the outlet end of the gas feed (3) is disposed and the plane in which the feed nozzles (7) are arranged extend parallel to each other and perpendicularly to the vertical centre line of the mixing and reaction chamber (5).

6. A reformer according to one of the preceding claims characterised in that the gas distributor (6) is in the form of a swirl-producing element.

7. A reformer according to one of the preceding claims characterised in that the gas distributor (6) comprises a housing whose vertical centre line coincides with the vertical centre line of the mixing or reaction chamber (5) and at its outside has slit-shaped openings which are defined by vertical guide walls (10).

8. A reformer according to one of the preceding claims characterised in that the guide walls (10) are arranged symmetrically relative to the vertical centre line of the mixing and reaction chamber and are set at an angle δ of less than 90° relative to the associated radius (11).

9. A reformer according to one of the preceding claims characterised in that the feed nozzles (7) are set at an angle α of between 25 and 45° relative to the associated radius (11').

10. A reformer according to one of the preceding claims characterised in that the feed nozzles (7) are provided with a cooling device and with a device for influencing the flame shape (13).

11. A reformer according to claim 10 characterised in that the cooling device comprises a cooling agent flowing in a closed or open double casing.

12. A reformer according to one of the preceding claims characterised in that the feed nozzles (7) are provided with a device for influencing the flame shape (12).

## Revendications

1. Appareil de reformage (1), en particulier de reformage secondaire autothermique, comprenant une conduite d'amenée de gaz (3) arrivant centralement par le bas en traversant le catalyseur (4) pour parvenir dans une chambre de mélange ou de réaction (5), et une conduite d'amenée d'agent d'oxydation (7),
caractérisé en ce que sont prévues dans au moins un plan au-dessus du lit de catalyseur (4) au moins deux buses d'amenée (7) traversant de l'extérieur vers l'intérieur l'isolation interne (9) et amenant l'agent d'oxydation, l'extrémité de sortie de la conduite d'amenée de gaz centrale (3) étant disposée dans le plan de la conduite d'amenée de l'agent d'oxydation ou dans un plan disposé encore plus haut au-dessus du plan des conduites d'amenée de l'agent d'oxydation.

2. Appareil de reformage selon la revendication 1, caractérisé en ce que les buses d'amenée (7) sont au ras du côté interne de l'isolation (9).

3. Appareil de réformage selon la revendication 1 ou 2, caractérisé en ce qu'il est prévu une conduite d'alimentation de forme annulaire pour alimenter les buses d'amenée (7).

4. Appareil de reformage selon l'une quelconque des revendications précédentes, caractérisé en ce que la conduite d'amenée de gaz centrale (3) est équipée à son extrémité de sortie d'un distributeur de gaz (6).

5. Appareil de reformage selon l'une quelconque des revendications précédentes, caractérisé en ce que le plan dans lequel est situé l'extrémité de sortie de la conduite d'amenée de gaz (3) et le plan dans lequel sont disposées les buses d'amenée (7) sont parallèles et perpendiculaires à l'axe vertical médian de la chambre de mélange et de réaction (5).

6. Appareil de reformage selon l'une quelconque des revendications précédentes, caractérisé en ce que le distributeur de gaz (6) est constitué sous forme d'un élément générateur de rotation.

7. Appareil de reformage selon l'une quelconque des revendications précédentes, caractérisé en ce que le distributeur de gaz (6) est constitué par un logement dont l'axe vertical médian coïncide avec l'axe vertical médian de la chambre de mélange ou de réaction (5) et comprend sur son côté externe des ouvertures en forme de fentes qui sont limitées par des parois déflectrices verticales (10).

8. Appareil de reformage selon l'une quelconque des revendications précédentes, caractérisé en ce que les parois déflectrices (10) sont disposées symétriquement par rapport à l'axe vertical médian de la chambre de mélange et de réaction et forment un angle δ inférieur à 90 avec le rayon associé (11).

9. Appareil de reformage selon l'une quelconque des revendications précédentes, caractérisé en ce que les buses d'amenée (7) forment un angle α compris entre 25° et 45 avec le rayon associé (11').

10. Appareil de reformage selon l'une quelconque des revendications précédentes, caractérisé en ce que les buses d'amenée (7) sont munies d'un dispositif de refroidissement et d'un dispositif pour influencer la forme des flammes (13).

11. Appareil de reformage selon la revendication 10, caractérisé en ce que le dispositif de refroidissement est constitué par une double enveloppe fermée ou ouverte dans laquelle passe un fluide de refroidissement.

12. Appareil de reformage selon l'une quelconque des revendications précédentes, caractérisé en ce que les buses d'amenée (7) sont munies d'un dispositif pour influencer la forme des flammes (12).
